# EUROPÄISCHE PATENTSCHRIFT

(11) **EP 4 423 879 B1**
(45) Veröffentlichungstag und Bekanntmachung des Hinweises auf die Patenterteilung: **09.07.2025**
(21) Anmeldenummer: 22809152.6
(22) Anmeldetag: 28.10.2022
(51) Int. Cl.: H02K 1/2791, H02K 1/30, H02K 5/24, H02K 21/22

(54) **ROTOR FÜR EINEN AUSSENLÄUFERMOTOR UND AUSSENLÄUFERMOTOR MIT DEM ROTOR**
ROTOR FOR AN EXTERNAL ROTOR MOTOR AND EXTERNAL ROTOR MOTOR WITH THE ROTOR
ROTOR POUR UN MOTEUR À INDUIT EXTÉRIEUR ET MOTEUR À INDUIT EXTERNE POURVU DE ROTOR

(30) Priorität: 29.10.2021 EP 21205609
(43) Veröffentlichungstag der Anmeldung: 04.09.2024
(73) Patentinhaber: maxon international ag, 6072 Sachseln (CH)
(72) Erfinder: TRACHSEL, Mathis, 6006 Luzern (CH); KREHER, Johannes, 6078 Lungern (CH); GASSER, Andreas, 6060 Sarnen (CH); WÜTHRICH, Christian, 6072 Sachseln (CH)
(74) Vertreter: Grünecker Patent- und Rechtsanwälte PartG mbB
(86) Internationale Anmeldenummer: PCT/EP2022/080174
(87) Internationale Veröffentlichungsnummer: WO 2023/073158

(56) Entgegenhaltungen:
- CN-U- 211 266 724
- DE-A1- 102017 123 085
- KR-A- 20110 042 745
- US-A1- 2008 197 738
- US-A1- 2015 340 913
- JAIN ANUJ KUMAR ET AL: "A novel approach to study effects of asymmetric stiffness on parametric instabilities of multi-rotor-system", JOURNAL OF SOUND AND VIBRATION, ELSEVIER, AMSTERDAM , NL, vol. 413, 31 October 2017 (2017-10-31), pages 159 - 172, XP085301244, ISSN: 0022-460X, DOI: 10.1016/J.JSV.2017.10.027
- CHAUVICOURT FABIEN ET AL: "Transversally Asymmetric Stiffness of Laminated Stator Core: A Solution for Noise Mitigation of Electric Machines", IEEE TRANSACTIONS ON ENERGY CONVERSION, IEEE SERVICE CENTER, PISCATAWAY, NJ, US, vol. 34, no. 2, 1 June 2019 (2019-06-01), pages 613 - 619, XP011724576, ISSN: 0885-8969, [retrieved on 20190514], DOI: 10.1109/TEC.2018.2865622

## Beschreibung

Die vorliegende Erfindung bezieht sich auf einen Rotor für einen Außenläufermotor gemäß Anspruch 1 umfassend ein als Rotorglocke ausgebildetes Rotorgehäuse mit in der Rotorglocke angeordneten Rotorpolen, wobei die Rotorglocke um eine Rotationsachse drehbar in einem Stator des Außenläufermotor lagerbar ist und eine in Bezug auf die Rotationsachse asymmetrische Steifigkeit, insbesondere eine asymmetrische Kippsteifigkeit aufweist.

Ferner bezieht sich die Erfindung auch auf einen Außenläufermotor gemäß Anspruch 10 mit einer Motorwelle, einem Stator mit einer Mehrzahl von Statorzähnen und einem erfindungsgemäßen, den Stator umgebenden Rotor.

Derartige Außenläufermotoren sind Flachmotoren mit eher geringer axialer Länge. Der Rotor wird durch die einseitige Rotorglocke mit der Motorwelle verbunden. Es hat sich gezeigt, dass die Glockenstruktur des Rotorgehäuses eines Außenläufermotors geräusch- und vibrationstechnisch ungünstig ist, da sie tiefe Eigenfrequenzen mit wenig Dämpfung, eine große Masse auf großem Durchmesser, geringen Lagerabstand und magnetische Kräfte nahe am Außendurchmesser aufweist. Um das Massenträgheitsmoment des Rotors klein zu halten muss die Rotorglocke möglichst dünnwandig ausgestaltet sein, dadurch besitzt die Rotorglocke jedoch eine geringe Steifigkeit, wodurch Schwingungen begünstigt werden.

Insbesondere wenn diese Außenläufermotoren drehmomentstark ausgelegt sind, unterliegen sie systembedingt starken magnetischen Kräften. Im realen System führen diese magnetischen Kräfte zu resultierenden Kraftanregungen, deren Amplitude und Zeitverlauf von Imperfektionen in der Geometrie und im Material und anderen Unregelmäßigkeiten abhängen. Neben dem resultierenden antreibenden Drehmoment, welches zwischen Rotor und Stator wirkt, wirken die magnetischen Kräfte vor allem in radialer Richtung, zwischen den Polen, d.h. zwischen den Magneten des Rotors und den Statorzähnen.

Die Eigenfrequenzen des Motors sind über die Steifigkeiten elastischer Komponenten und bewegliche Massen, bzw. Trägheit gemäß den Gesetzen der Physik definiert. Kommt es zu einer Schwingungsanregung in irgendeiner Form in der Nähe der Eigenfrequenz, so führt dies zu einer starken Zunahme der Schwingungsamplitude (Resonanz), wobei die Schwingungsamplitude nur durch eine Dissipation der Schwingungsenergie (Dämpfung) begrenzt werden kann.

Konstruktionsbedingt sind die elastischen Elemente eines solchen Ausläufermotors, welche hauptsächlich an der Schwingung partizipieren, die Rotorglocke und die elastischen Kontakte der Lagerung, insbesondere Kugellager, wobei Rotorglocke und Lagerung mit sehr wenig Dämpfung behaftet sind, was sich durch eine starke Überhöhung der Schwingungsamplitude in Resonanznähe äußert.

Aus der CN 211266724 U ist eine Endabdeckung für Permanentmagnet-Synchronmotoren bekannt, die einen Endabdeckungskörper und eine Mehrzahl von an dem Endabdeckungskörper angeordneten Verstärkungsrippen umfasst. Die Verstärkungsrippen der Endabdeckung des Permanentmagnet-Synchronmotors sind asymmetrisch angeordnet. Dadurch kann das Problem, dass elektromagnetische Kraftwellen mit der Strukturschwingung des Motors unter elektromagnetischer Erregung des Motors in Resonanz treten, gelöst werden und Arbeitsgeräusche des Permanentmagnet-Synchronmotors können reduziert werden.

Auch die CN 112271852 A zeigt eine Endabdeckung für einen Permanentmagnet-Synchronmotor zur Geräuschreduzierung. Die Endabdeckung weist innere und äußere Verstärkungsrippen auf, wobei die inneren Verstärkungsrippen ebenfalls asymmetrisch verteilt sind.

In diesen beiden Dokumenten wird die Endabdeckung, also ein nicht rotierendes Teil des Motorgehäuses, mit asymmetrischen angeordneten Verstärkungsrippen versehen. Dies führt bereits zu einer Verringerung von Geräuschen und Vibrationen, es besteht jedoch weiterhin Verbesserungsbedarf.

Ferner zeigt die DE 10 2017 123085 A1 einen Außenläufermotor mit einem mehrere elektronisch schaltbare Pole aufweisenden Stator und einem relativ zu dem Stator rotierbar gelagerten, den Stator zumindest teilweise umgebenden Rotor. Der Rotor ist topfförmig ausgebildet und umfasst mehrere in Umfangsrichtung hintereinander angeordnete Permanentmagneten. Der Außenläufermotor ist ausgelegt, um eine Abtriebsunwucht auszugleichen, die durch einen Abtriebsstrang des Gerätes, in das der Außenläufermotor eingebaut wird, bedingt ist. Dazu weist der Außenläufermotor zwei Kontermassen zur Erzeugung einer definierten Unwucht auf. Die erste Kontermasse ist an einem Teil der Umfangsfläche des Rotors angeformt und einteilig mit dem Rotor ausgebildet. Die zweite Kontermasse kann derart ausgebildet sein, dass Teilbereiche der Stirnseite des topfförmigen Rotors ausgestanzt und auf die verbliebenen Teilbereiche der Rotorstirnseite umgebogen werden

Aufgabe der vorliegenden Erfindung ist es daher, die aus dem Stand der Technik bekannten Probleme weiter zu verbessern und insbesondere einen Rotor für einen Außenläufermotor und einen Außenläufermotor mit einem derartigen Rotor schwingungsärmer und leiser auszugestalten.

Diese Aufgabe wird gelöst durch die Merkmale der unabhängigen Ansprüche 1 und 10.

Hierzu ist erfindungsgemäß vorgesehen, dass der Schwerpunkt der Rotorglocke auf ihrer Rotationsachse liegt.

Die Rotorglocke ist ein einseitig zumindest teilweise geschlossenes, topfförmiges Gehäuse mit einer Mantelfläche und einer Stirnseite. Die Kippsteifigkeit verhindert ein Verkippen der Stirnseite bzw. der Mantelfläche der Rotorglocke in einer bezogen auf diese senkrechte Kipprichtung. Die asymmetrische Kippsteifigkeit ist weder punkt- noch drehsymmetrisch in Bezug auf die Rotationsachse. Die Rotorpole sind bevorzugt als Permanentmagnete ausgebildet. An bzw. in der Stirnseite ist eine Lagerstelle zur einseitigen Lagerung der Rotorglocke auf der Motorwelle vorgesehen. Die mathematische Lösung des Eigenwertproblems zur Lösung der Schwingungsdifferenzialgleichungen für die Hauptschwingungsmodi in Umfangsrichtung ist nicht definiert. Kraftanregungen zeigen aber deutliche Komponenten in Umfangsrichtung. Dies führt zu der Erkenntnis, dass die elastische relative Kippbewegung zwischen Rotor und Stator mit einer umlaufenden Bewegung verbunden ist. Mit dieser Erkenntnis kann das mechanische Rotordesign optimiert werden. Während auf die Kippsteifigkeit der Lagerung kaum Einfluss genommen werden kann, ist es möglich, die Kippsteifigkeit der Rotorglocke zu optimieren. Die Glockenstruktur der Rotorglocke ist also derart ausgeführt, dass die Kippsteifigkeit der Rotorglocke in Funktion des Verdrehwinkels bei einer Drehung um die Rotationsachse unregelmäßig variiert. Die asymmetrische Ausgestaltung der Kippsteifigkeit der Rotorglocke in Bezug auf die Rotationsachse führt einerseits dazu, dass die Kippeigenfrequenzen, welche üblicherweise, bei symmetrischer Ausgestaltung, nahe beieinanderliegen, stark voneinander separiert werden. Andererseits kann ein in Resonanznähe schwingender Kipp-Eigenmode nicht einfach rotieren, da sich die Kippsteifigkeit in Abhängigkeit des Winkels um die Drehachse stark verändert, was sich bei einer Vibrations- oder Geräuschanalyse durch eine Aufspaltung der Resonanzspitzen und somit durch eine stärkere Dämpfung mit reduzierten Schwingungsamplituden äußert. Durch diese Ausgestaltung der Rotorglocke ist somit eine zusätzliche Dämpfung und eine Reduktion der Anregung möglich. Es wird ein unwuchtarmer und damit ruhiger Lauf des Motors erreicht.

Vorteilhafte Ausführungsformen der vorliegenden Erfindung sind Gegenstand der Unteransprüche.

Gemäß einer bevorzugten Ausführungsform kann vorgesehen sein, dass die Rotorglocke Bereiche unterschiedlicher Geometrie und/oder aus unterschiedlichen Materialen aufweist. Dadurch wird auf einfache Art die gewünschte asymmetrische Kippsteifigkeit der Rotorglocke in Bezug zur Rotationsachse erreicht. So kann beispielsweise vorgesehen sein, dass die Rotorglocke in Umfangsrichtung unterschiedliche Dicke aufweist oder aus unterschiedlichen Materialien besteht.

In einer weiteren bevorzugten Ausführungsform kann vorgesehen sein, dass eine senkrecht zur Rotationsachse ausgebildete Stirnseite der Rotorglocke asymmetrisch ausgebildet ist. Dadurch wird auf einfache und stabile Weise die gewünschte asymmetrische Kippsteifigkeit der Rotorglocke erreicht. Die Mantelfläche der Rotorglocke kann dabei symmetrisch, insbesondere achsensymmetrisch oder rotationssymmetrisch, ausgebildet sein. Dies ermöglicht ebenfalls einen unwuchtarmen Lauf des Motors, sowie eine kostengünstige Produktion der Rotorglocke.

Vorzugsweise kann die Stirnseite der Rotorglocke dann derart ausgebildet sein, dass sie mindestens eine Aussparung und Speichen aufweist, wobei die Speichen aus unterschiedlichen Materialien bestehen und/oder unterschiedliche Dicken bzw. Breiten aufweisen und/oder unterschiedliche Winkel zwischen sich einschließen. Dies führt zu der erfindungsgemäßen asymmetrischen Kippsteifigkeit der Rotorglocke und damit zu einer Reduzierung von Geräuschen und Vibrationen. Die Speichen erstrecken sich dabei ausgehend von einem Lagerbereich in der Stirnseite der Rotorglocke zum Umfang der Rotorglocke. Bei dieser Ausführungsform sind die ersten beiden Kippmoden stark voneinander separiert und die Kippeigenfrequenzen der beiden ersten Kippeigenmoden liegen zwischen 100-500 Hz, besonders bevorzugt zwischen 300-500 Hz oder mehr auseinander.

Gemäß noch einer weiteren Ausführungsform kann vorgesehen sein, dass die Speichen derart asymmetrisch um die Rotationsachse verteilt angeordnet sind, dass sie jeweils zwischen zwei Rotorpolen angeordnet sind. Durch die Anordnung der Speichen zwischen den Rotorpolen, also den Permanentmagneten des Rotors, kann ein ungünstiger magnetischer Fluss durch die Rotorglocke vermieden werden, welcher zusätzliche magnetische Anregungen hervorrufen könnte. Vorzugsweise ist der Rotorrückschluss im Übergangsbereich zu den Speichen nicht gesättigt, um die Speichenstruktur besser von dem Magnetkreis zu entkoppeln.

Bevorzugt ist die Anzahl der Speichen kleiner als die Anzahl der durch jeweils zwei Rotorpole gebildeten Rotorpolpaare, wobei vorzugsweise mindestens vier Speichen vorgesehen sind. Besonders bevorzugt entspricht die Anzahl der Speichen einer Primzahl. Dadurch kann die gewünschte asymmetrische Anordnung der Speichen in der Stirnseite der Rotorglocke einfach ermöglicht werden. Besonders bevorzugt kann hierbei vorgesehen werden, dass die Anzahl der Speichen den beiden nächstkleineren Primzahlen bezogen auf die Anzahl der Rotorpolpaare entspricht. Allgemein sind fünf oder sieben Speichen und insbesondere fünf Speichen vorteilhaft.

Noch eine weitere bevorzugte Ausführungsform kann vorsehen, dass die Speichen asymmetrisch in Bezug auf die Rotationsachse verteilt angeordnet sind und jeweils einen möglichst gleichgroßen Winkel einschließen. Die Speichen sind dabei möglichst gleich verteilt angeordnet. Eine bevorzugte Ausführungsform eines Motors kann vorsehen, dass 12 Rotorpole in der Rotorglocke angeordnet sind und die Stirnseite fünf Speichen aufweist. In dieser Ausführung sind nebeneinanderliegende Speichen minimal zwei und maximal drei Rotorpolzwischenräume voneinander beabstandet bzw. schließen einen Winkel von minimal 60° und maximal 90° miteinander ein. Bei einer derartigen Ausführung der Rotorglocke beträgt die Kippsteifigkeit der Rotorglocke, welche einer Verkippung der Stirnseite der Rotorglocke bezogen auf diese senkrechte Kipprichtung entgegenwirkt, zwischen 1 bis 5 Nm/grad. Dabei hat der in Bezug zur Rotationsachse angeordnete Bereich der Rotorglocke mit der höchsten Steifigkeit eine zwischen 20 - 60% höhere Steifigkeit als der Bereich mit der geringsten Steifigkeit in Bezug zur Rotationsachse.

Noch eine weitere bevorzugte Ausführungsform kann vorsehen, dass die Rotorpole auf der radial äußeren Seite bogenförmig und auf der radial inneren Seite flach ausgebildet sind. Vorzugsweise sind die Rotorpole als diskrete anisotrope Magnetsegmente ausgeführt. Durch diese Ausgestaltung der Rotorpole kann der Verlauf der Luftspaltflussdichte im Außenläufermotor geglättet werden und der magnetische Fluss im Luftspalt erhält idealerweise einen sinusförmigen Verlauf. Dadurch werden sprunghafte und stärkere Anregungen vermieden. Gleichzeitig reduzieren derartige Rotorpole bzw. Magnete die Kosten im Vergleich zu Bogenmagneten, da die glatte Fläche weniger Bearbeitung erfordert als eine bogenförmige Fläche.

Gemäß einer weiteren bevorzugten Ausführungsform kann vorgesehen sein, dass ein ringförmiges Dämpfungselement in den Rotor eingesetzt ist. Vorzugsweise ist das Dämpfungselement als Ring aus einem Kunststoff mit guten Dämpfungseigenschaften, wie beispielsweise glasfaserverstärktem PPA (Polyphthalamide), welches eine hohe Steifigkeit aufweist, ausgebildet. Der Kunststoffring umfasst entlang seiner Umfangsfläche in Umfangsrichtung gleichmäßig verteilt angeordnete Stege. Vorzugsweise entspricht die Anzahl der Stege der Anzahl der Rotorpolzwischenräume. Der Kunststoffring wird in die Rotorglocke eingesetzt, vorzugsweise derart, dass die Stege in den Zwischenräumen zwischen den Rotorpolen zu liegen kommen. Durch die hohe Steifigkeit des Kunststoffrings wird die Mantelfläche der Rotorglocke zusätzlich stabilisiert und die gewünschte Dämpfung erzielt.

Betreffend einen Außenläufermotor mit einer Motorwelle, einem Stator mit einer Mehrzahl von Statorzähnen und einem den Stator umgebenden, wie oben beschriebenen Rotor wird die oben genannte Aufgabe dadurch gelöst, dass die Anzahl der Statorzähne kleiner ist als die Anzahl der Rotorpole. Vorzugsweise handelt es sich bei dem Außenläufermotor um einen elektronisch kommutierten Außenläufermotor. Auch eine optimierte Auslegung des Rotor- und Statorsystems trägt zu einer Verringerung bzw. einer Vermeidung der Geräusche und Vibrationen des Motors bei. Hierbei hat sich gezeigt, dass eine Kombination von 12 Rotorpolen zu 8 Statorzähnen oder 16 Rotorpolen zu 12 Statorzähnen vorteilhaft ist. Bei Rotoren mit größeren Durchmessern können auch Kombinationen von 28 Rotorpolen zu 24 Statorzähnen oder 40 Rotorpolen zu 36 Statorzähnen vorteilhaft sein. Allgemein sind Verhältnisse von 4 Rotorpolen zu 3 Statorzähnen oder 7 Rotorpolen zu 6 Statorzähnen oder 10 Rotorpolen zu 9 Statorzähnen oder Vielfache dieser Verhältnisse besonders geeignet.

In einer weiteren bevorzugten Ausführungsform weist jeder der Statorzähne einen Statorzahnkopf auf und der tangentiale Abstand der Rotorpole ist größer als die tangentiale Nutspaltbreite zwischen zwei Statorzahnköpfen. Insbesondere liegt das Verhältnis von tangentialer Nutspaltbreite zwischen zwei Statorzahnköpfen zu tangentialem Abstand der Rotorpole zwischen 0,5 und 0,85. Auch diese Ausgestaltung führt zu reduzierter Geräusch- und Vibrationsentwicklung.

Eine weitere bevorzugte Ausführungsform kann vorsehen, dass das Verhältnis von tangentialer Nutspaltbreite zwischen zwei Statorzahnköpfen zur tangentialen Breite eines Statorzahnkopfes <= 0,25 ist und bevorzugt in einem Bereich zwischen 0,11 und 0,2 liegt. Durch einen möglichst breiten Statorzahnkopf kann eine Reluktanzänderung aus Sicht des Rotors über eine Umdrehung reduziert werden, wodurch die magnetischen Anregungen reduziert werden. Auch dies führt zu einer Verringerung von Geräusch- und Vibrationsentwicklung.

Eine weitere Verringerung von Geräuschentwicklung und Vibrationsentwicklung kann dadurch ermöglicht werden, dass jeder Statorzahn einen Statorzahnhals aufweist, um welchen eine Kupferwicklung angeordnet ist, wobei die Breite des Statorzahnhalses derart ausgelegt ist, dass der Magnetfluss im Statorzahnhals während des Motorbetriebes nicht den Sättigungsbereich erreicht.

Noch eine weitere bevorzugte Ausführungsform kann vorsehen, dass jeder der Statorzähne einen Statorzahnkopf aufweist und zwischen dem Rotor und dem Stator ein Luftspalt ausgebildet ist, wobei das Verhältnis zwischen einer Breite des Luftspaltes und der tangentialen Nutspaltbreite zwischen zwei Statorzahnköpfen in einem Bereich von 0,25 bis 0,5 liegt. Auch durch diese resultierende Reduzierung des Luftspaltfeldes können Anregungen des Systems vermieden werden.

Ausführungsbeispiele der vorliegenden Erfindung werden nachfolgend anhand von Zeichnungen näher erläutert.

Es zeigen:
Figur 1a, b: perspektivische Darstellungen einer ersten Ausführungsform eines Rotors;
Figur 2a, b: weitere perspektivische Darstellungen des Rotors aus Fig. 1a, b;
Figur 3: Ansicht in Axialrichtung auf den Rotor aus Fig. 1a, b;
Figur 4: perspektivische Darstellung eines Dämpfungselements für einen Rotor;
Figur 5: weitere Ausführungsform eines Rotors in einer axialen Ansicht;
Figur 6: Ausschnitt eines Außenläufermotors mit einem Rotor und einem Stator in einer Ansicht in Axialrichtung; und
Figur 7a-e: Ansicht in Axialrichtung der Deformation in Radialrichtung einer Mantelfläche eines Rotors.

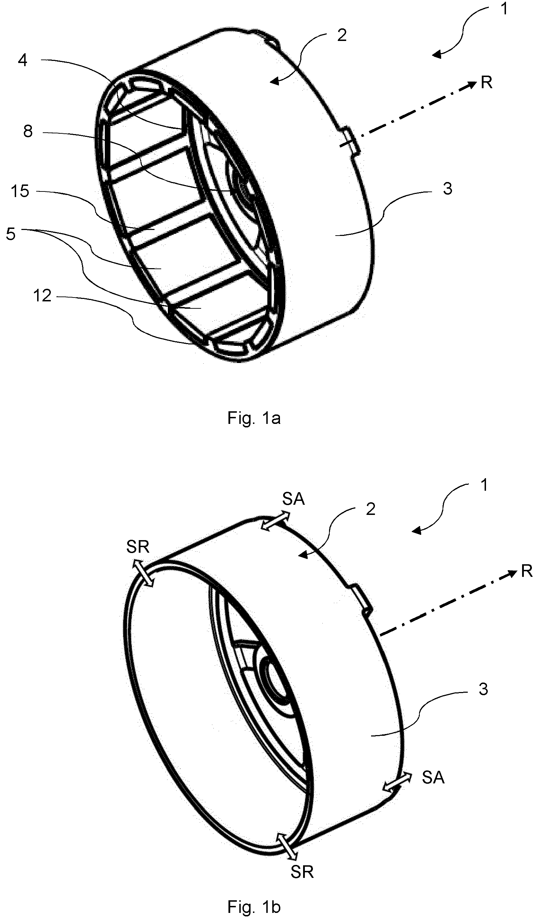

Fig. 1a zeigt eine perspektivische Darstellung einer ersten Ausführungsform eines erfindungsgemäßen Rotors 1 für einen Außenläufermotor, vorzugsweise einen elektronisch kommutierten Außenläufermotor. Der Rotor 1 umfasst ein als Rotorglocke 2 ausgebildetes Rotorgehäuse. Die Rotorglocke 2 ist daher im Wesentlichen glocken- oder topfförmig und umfasst eine im Wesentlichen zylindrische Mantelfläche 3 und eine im Wesentlichen senkrecht zur Mantelfläche 3 verlaufende Stirnseite 4. In der Stirnseite 4 ist eine Lagerstelle 8 ausgebildet, mit der die Rotorglocke 2 auf der Motorwelle eines Außenläufermotors und damit in dem Stator lagerbar ist. Die Rotorglocke 2 weist ferner eine Rotationsachse R auf, die sich durch die Lagerstelle 8 erstreckt. Die Rotationsachse R verläuft senkrecht zur Stirnseite 4 der Rotorglocke 2. Die Rotorglocke 2 ist um die Rotationsachse R in dem Außenläufermotor drehbar beziehungsweise lagerbar.

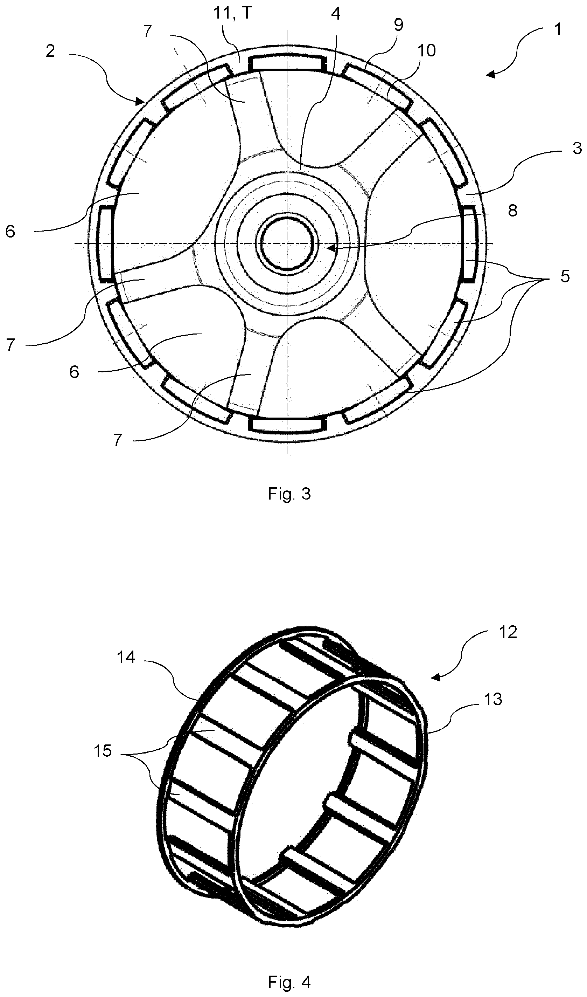

In der Rotorglocke 2 ist an der Innenseite der Mantelfläche 3 ein Dämpfungselement 12 (Kunststoffring) angeordnet. Das Dämpfungselement 12 umfasst Stege 15 welche zwei kreisförmige Endabschnitte 13, 14 verbinden. Zwischen den Stegen 15 in den Ausnehmungen des Dämpfungselement 12 sind Rotorpole 5 angeordnet. Die Rotorpole 5 sind an der Innenseite der Mantelfläche 3 gleichmäßig um den Umfang der Rotorglocke angeordnet. Die Rotorpole 5 sind bevorzugt als Permanentmagneten ausgebildet und hierbei vorzugsweise als diskrete, anisotrope Magnetsegmente. Jeweils zwei Rotorpole 5 bilden ein Rotorpolpaar aus. Die Rotorpole 5 werden im Folgenden unter Bezug auf Fig. 3 noch genauer beschrieben.

Derartige Außenläufermotoren zeichnen sich durch eine eher geringe axiale Länge aus. Der Rotor 1 wird durch die einseitige Rotorglocke 2 mit der Motorwelle verbunden. Eine solche Glockenstruktur für das Rotorgehäuse ist geräusch- und vibrationstechnisch eher ungünstig, da sie tiefe Eigenfrequenzen mit weniger Dämpfung, große Masse auf großem Durchmesser, geringen Lagerabstand und magnetische Kräfte nahe am Außendurchmesser aufweist.

Erfindungsgemäß ist daher die Glockenstruktur der Rotorglocke 2 derart ausgeführt, dass die Kippsteifigkeit der Rotorglocke 2 in Funktion des Rotorwinkels um die Rotationsachse R unregelmäßig variiert. Die Kippsteifigkeit der Rotorglocke 2 ist also asymmetrisch in Bezug auf die Rotationsachse R. Die asymmetrische Kippsteifigkeit der Rotorglocke 2 kann beispielsweise dadurch erreicht werden, dass die Rotorglocke Bereiche unterschiedlicher Geometrie aufweist. Dies können beispielsweise Bereiche unterschiedlicher Wandstärke oder in der Rotorglocke ausgebildete Aussparungen sein. Eine andere Möglichkeit ist, dass Bereiche der Rotorglocke 2 aus unterschiedlichen Materialien bestehen. Vorteilhafterweise ist die Asymmetrie der Rotorglocke 2 dabei derart ausgeführt, dass der Schwerpunkt der Rotorglocke 2 stets auf der Rotationsachse R liegt.

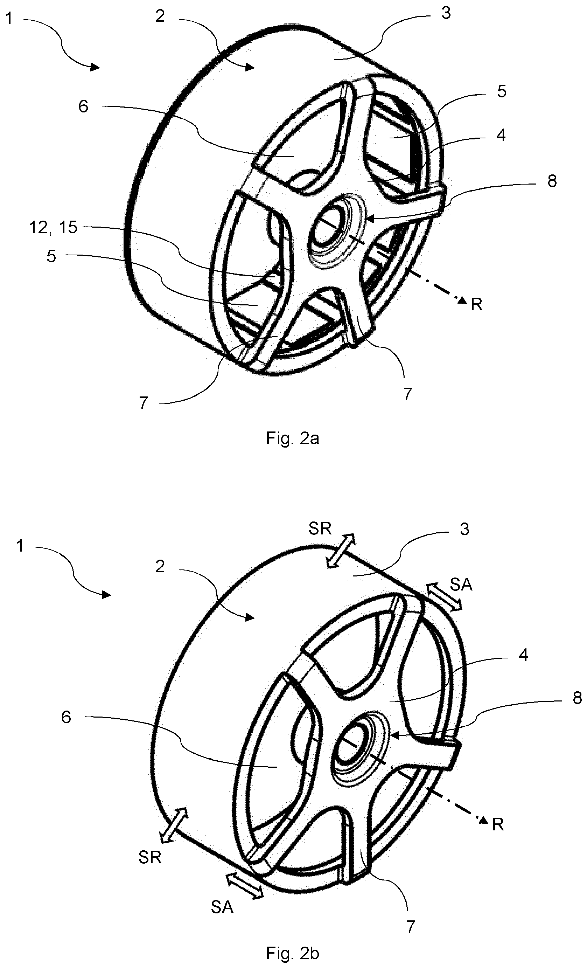

In dem in Figuren 1a, b und 2a, b gezeigten Ausführungsbeispiel ist die Stirnseite 4 der Rotorglocke 2 asymmetrisch ausgebildet. Dies ist in Fig. 2a, b gut zu sehen. Fig. 2a, b zeigen ebenfalls eine perspektivische Darstellung des Rotors 1 aus Fig. 1a, b, wobei der Rotor 1 von der anderen Seite entlang der Rotationsachse R zu sehen ist. Die Stirnseite 4 der Rotorglocke 2 weist Aussparungen 6 und Speichen 7 auf. Die Speichen 7 erstrecken sich ausgehend von der Lagerstelle 8 in radialer Richtung, also senkrecht zur Rotationsachse R, zur Mantelfläche 3 der Rotorglocke 2. Zwischen den Speichen 7 sind die Aussparungen 6 ausgebildet. Der Schwerpunkt der Rotorglocke 2 liegt auf der Rotationsachse R. Die Speichen 7 und die Aussparungen 6 werden im Folgenden in Bezug auf Fig. 3 noch näher erläutert. Bei dieser Ausführung der Asymmetrie des Rotors 1 bzw. der Rotorglocke 2 ergibt sich, dass die ersten beiden Kippeigenmoden stark voneinander separiert werden und deren Kippeigenfrequenzen bevorzugt zwischen 100 und 500 Hz auseinanderliegen.

Im Unterschied zu den Figuren 1a und 2a zeigen die Figuren 1b und 2b eine perspektivische Darstellung des Rotors 1 ohne Rotorpole 5 und Dämpfungselement 12. Die Mantelfläche 3 der Rotorglocke 2 ist dabei zylindrisch. Durch Doppelpfeile SR an der Mantelfläche 3 der Rotorglocke 2 wird angezeigt in welche Richtungen die Rotorglocke 2 zu Schwingungen hauptsächlich durch die magnetischen Kräfte angeregt wird. Die Rotorglocke 2 wird dabei im Wesentlichen durch die magnetischen Anziehungskräfte und teilweise durch magnetische Abstoßungskräfte zwischen den Statorzähnen 18 und den Rotorpolen 5 in radialer Richtung SR angeregt beziehungsweise elastisch deformiert. Unter anderem dadurch, dass die Mantelfläche 3 lediglich an einer der senkrecht zu der Mantelfläche 3 beziehungsweise senkrecht zu der Rotationsachse R liegenden Stirnseite 4 mit der Rotationsachse R verbunden ist, werden auch in axialer Richtung SA Schwingungen in die Rotorglocke 2 induziert.

Fig. 3 zeigt eine Ansicht in Axialrichtung auf den Rotor 1 aus Fig. 1a, b mit der erfindungsgemäßen Rotorglocke 2 entlang der Rotationsachse R. Die asymmetrische Ausgestaltung der Stirnseite 4 der Rotorglocke 2 ist hier gut zu erkennen. Die Stirnseite 4 weist fünf in Umfangsrichtung verteilte Speichen 7 und ebenfalls fünf zwischen den Speichen 7 ausgebildete Aussparungen 6 auf. In der Mantelfläche 3 der Rotorglocke 2 sind 12 Rotorpole 5 gleichmäßig verteilt angeordnet. Die benachbarten Rotorpole 5 sind jeweils beabstandet zueinander angeordnet, sodass zwischen ihnen ein Rotorpolzwischenraum 11 mit einem tangentialen Abstand T ausgebildet ist. Durch diese Anordnung werden also sechs Rotorpolpaare in der Rotorglocke 2 ausgebildet.

Wie bereits beschrieben sind die Rotorpole 5 als diskrete anisotrope Magnetsegmente ausgeführt. An ihrer radial äußeren Seite 9 sind die Rotorpole 5 bogenförmig ausgeführt. Auf ihrer gegenüberliegenden Seite, also auf der radial innen liegenden Seite 10, sind die Rotorpole 5 flach ausgeführt. Hierdurch kann der Verlauf der Luftspaltflussdichte geglättet werden und der magnetische Fluss erhält im ausgebildeten Luftspalt, zwischen dem Rotor und dem Stator des Außenläufermotors, idealerweise einen sinusförmigen Verlauf. Dadurch werden sprunghafte und stärkere Anregungen vermieden. Gleichzeitig reduziert die derartige Ausgestaltung der Rotorpole 5 die Kosten im Vergleich zu Bogenmagneten, da die glatte bzw. plane Fläche, also die radial innenliegende Fläche 10, weniger Bearbeitung erfordert als eine bogenförmige Fläche.

Jede der Speichen 7 ist zwischen jeweils zwei Rotorpolen 5 des Rotors 1 angeordnet. Durch die Anordnung der Speichen 7 zwischen den Rotorpolen 5 kann ein ungünstiger magnetischer Fluss durch die Rotorglocke 2 vermieden werden, welcher zusätzliche magnetische Anregungen hervorrufen könnte. Vorzugsweise ist der Rotorrückschluss im Übergangsbereich zu den Speichen nicht gesättigt, um die Speichen 7 besser von dem Magnetkreis zu entkoppeln. Die fünf Speichen 7 sind daher asymmetrisch entlang des Umfangs der Stirnseite 4 der Rotorglocke 2 verteilt. Vorzugsweise sind die Speichen 7 dabei derart angeordnet, dass sie zwischen sich einen möglichst gleichgroßen Winkel einschließen bzw. möglichst gleich verteilt angeordnet sind. Wie in Fig. 3 zu sehen, bedeutet dies, dass die Speichen 7 minimal zwei und maximal drei Rotorpolzwischenräume 11 zwischen sich einschließen. Der zwischen zwei Speichen 7 aufgespannte Winkel beträgt dabei minimal 60° und maximal 90°. Die Speichen 7 weisen unterschiedliche Breiten oder Dicken auf, sodass der Schwerpunkt der Rotorglocke 2 stets auf der Rotationsachse R liegt. Wie in Fig. 3 zu erkennen, sind in dem ersten Ausführungsbeispiel die beiden oberen Speichen 7 ein wenig breiter als die drei unteren Speichen 7 ausgebildet. Alternativ wäre es auch denkbar, dass die Speichen unterschiedliche Dicke aufweisen oder aus unterschiedlichen Materialien bestehen.

Fig. 4 zeigt das Dämpfungselement 12 in einer Einzelansicht, das in den in den Figuren 1a, 2a und 3 gezeigten Rotor 1 eingesetzt ist. Das Dämpfungselement 12 ist ringförmig ausgebildet und umfasst zwei kreisförmige Endabschnitte 13, 14, die über senkrecht dazu verlaufende Stege 15 miteinander verbunden sind. Die Stege 15 sind derart bemessen, dass sie in die Rotorpolzwischenräume 11 eingefügt werden können, wie auch aus den Figuren 1a, 2a und 3 ersichtlich ist. Vorzugsweise ist das Dämpfungselement 12 aus einem Kunststoffmaterial, insbesondere aus glasfaserverstärktem PPA (Polyphthalamide), welches eine hohe Steifigkeit aufweist, hergestellt. Dadurch kann die Mantelfläche der Rotorglocke zusätzlich stabilisiert und gedämpft werden kann.

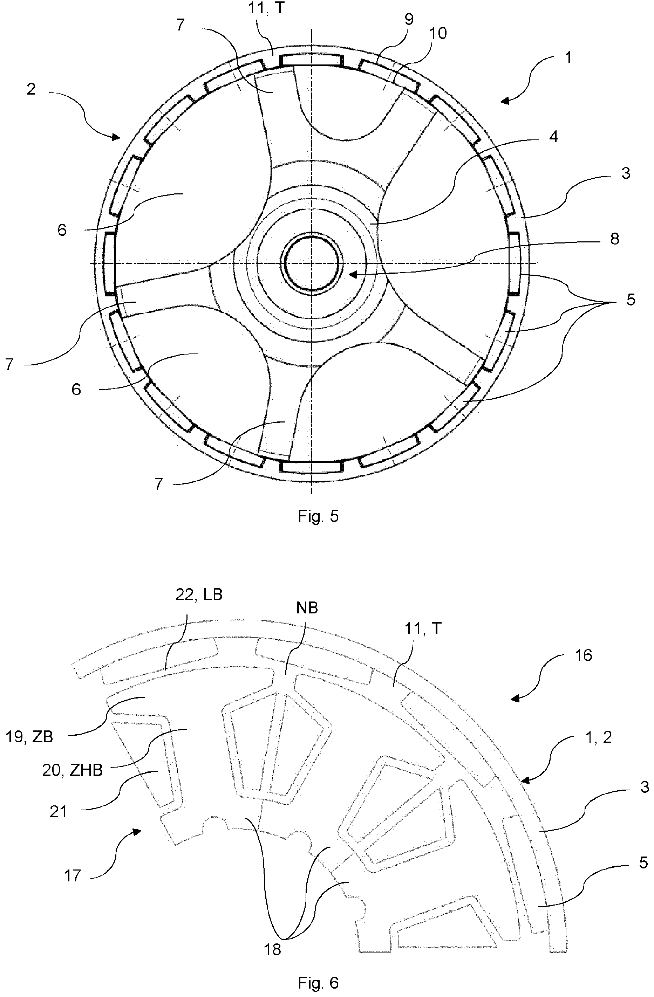

Fig. 5 zeigt ein weiteres Ausführungsbeispiel eines Rotors 1 für einen Außenläufermotor. Der in Fig. 5 gezeigte Rotor 1 ist im Wesentlichen genauso aufgebaut wie der bereits beschriebene Rotor 1. Für die im Folgenden nicht beschriebenen Bauteile wird daher auf die obige Beschreibung in Bezug auf die Figuren 1 bis 3 verwiesen. Im Folgenden wird daher im Wesentlichen nur auf die Unterschiede eingegangen. In dem in Fig. 5 gezeigten Ausführungsbeispiel sind 16 Rotorpole 5 in der Mantelfläche 3 der Rotorglocke 2 angeordnet. In der Rotorglocke 2 sind daher acht Rotorpolpaare ausgebildet. Die Stirnseite 4 der Rotorglocke 2 weist wiederum fünf Aussparungen 6 und fünf Speichen 7 auf. Die Speichen 7 sind zwischen den Rotorpolen 5 angeordnet. Dies führt zu den oben beschriebenen Vorteilen.

Es sind auch weitere Ausführungsformen der Rotorglocke möglich. Bevorzugt ist die Rotorglocke mit einer Anzahl von mindestens vier Speichen ausgeführt. Weiter entspricht die Anzahl der Speichen der Rotorglocke bevorzugt eine Primzahl. Weiter bevorzugt ist die Anzahl der Speichen kleiner als die Anzahl der Rotorpolpaare. Besonders bevorzugt entspricht die Anzahl der Speichen den beiden nächst kleineren Primzahlen bezogen auf die Anzahl der Rotorpolpaare. Allgemein sind fünf oder sieben Speichen und insbesondere fünf Speichen vorteilhaft.

In Fig. 6 ist ein Ausschnitt eines Außenläufermotors 16 dargestellt. Der Außenläufermotor 16 umfasst einen Stator 17 und einen erfindungsgemäßen Rotor 1. Der Rotor 1 kann beispielsweise wie in den Figuren 1 bis 3 bzw. 5 dargestellt ausgebildet sein.

Außenläufermotoren mit derartigen Rotoren unterliegen, insbesondere, wenn sie drehmomentstark ausgelegt sind, systembedingt starken magnetischen Kräften. Im Idealfall heben sich diese magnetischen Kräfte auf. Im realen System führen sie jedoch zu resultierenden Kraftanregungen, deren Amplitude und Zeitverlauf von Imperfektionen der Geometrie und Material und anderen Unregelmäßigkeiten abhängen. Neben dem resultierenden antreibenden Drehmoment, welches zwischen Rotor und Stator wirkt, wirken die magnetischen Kräfte vor allem in radialer Richtung, zwischen den Rotorpolen des Rotors und den Statorzähnen.

Die Eigenfrequenzen des Motors sind über die Steifigkeiten elastischer Komponenten und beweglicher Massen, bzw. Trägheiten gemäß den Gesetzen der Physik definiert. Kommt es zu einer Schwingungsanregung in irgendeiner Form in der Nähe der Eigenfrequenz, so führt dies zu einer starken Zunahme der Schwingungsamplitude (Resonanz), wobei die Schwingungsamplitude nur durch eine Dissipation der Schwingungsenergie (Dämpfung) begrenzt werden kann. Konstruktionsbedingt sind die elastischen Elemente eines solchen Außenläufermotors, welche hauptsächlich an der Schwingung partizipieren, die Rotorglocke und die elastischen Kontakte der Lagerung, insbesondere Kugellager, wobei Rotorglocke und Lagerung mit sehr wenig Dämpfung behaftet sind, was sich durch eine starke Überhöhung der Schwingungsamplitude in Resonanznähe äußert. Um die Außenläufermotoren schwingungsärmer und leiser zu machen, ist somit jede zusätzliche Dämpfung und jede Reduktion der Anregung sehr willkommen.

Die mathematische Lösung des Eigenwertproblems zur Lösung der Schwingungsdifferenzialgleichung für die Hauptschwingungsmodi in Umfangsrichtung ist nicht definiert. Kraftanregungen zeigen jedoch deutliche Komponenten in Umfangsrichtung. Daraus kann geschlossen werden, dass die elastische relative Kippbewegung zwischen Rotor und Stator mit einer umlaufenden Bewegung verbunden ist. Mit dieser Erkenntnis wurde das mechanische Rotordesign wie oben beschrieben optimiert.

Der Rotor 1 umfasst also eine Rotorglocke 2 mit einer Mantelfläche 3. In bzw. an der Mantelfläche 3 sind die Rotorpole 5 angeordnet. Der Rotor 1 kann gemäß einem der beiden oben genannten Ausführungsbeispielen ausgebildet sein, und wird daher im Folgenden nicht näher beschrieben. Es wird auf die Figuren 1 bis 3 und 5 verwiesen.

Der Stator 17 umfasst eine Mehrzahl von Statorzähnen 18. Jeder Statorzahn 18 umfasst einen Statorzahnkopf 19 und einen Statorzahnhals 20. Um jeden Statorzahnhals 20 ist eine Kupferwicklung 21 angeordnet. Bevorzugt hat der Rotor 1 mehr Rotorpole 5 als Statorzähne 18. Insbesondere ist eine Kombination von 12 Rotorpolen zu 8 Statorzähnen oder 16 Rotorpolen zu 12 Statorzähnen vorteilhaft. Bei Rotoren mit größeren Durchmessern können auch Kombinationen von 28 Rotorpolen zu 24 Statorzähnen oder 40 Rotorpolen zu 36 Statorzähnen vorteilhaft sein. Allgemein sind Verhältnisse von 4 Rotorpolen zu 3 Statorzähnen oder 7 Rotorpolen zu 6 Statorzähnen oder 10 Rotorpolen zu 9 Statorzähnen oder vielfache dieser Verhältnisse besonders geeignet.

In einer bevorzugten Ausführung ist der tangentiale Abstand T der Rotorpole 5, also die Breite der Rotorpolzwischenräume 11, grösser als die tangentiale Nutspaltbreite NB zwischen zwei Statorzahnköpfen 19. Insbesondere liegt das Verhältnis von tangentialer Nutspaltbreite NB zu tangentialem Abstand T der Rotorpole bevorzugt zwischen 0.5 und 0.85.

Weiter bevorzugt ist das Verhältnis der tangentialen Nutspaltbreite NB zur tangentialen Breite ZB eines Statorzahnkopfes 19 <= 0.25 und liegt insbesondere in einen Bereich zwischen 0.11 und 0.2. Durch einen möglichst breiten Statorzahnkopf 19 können Nichtlinearitäten durch eine Sättigung des Magnetflusses im Statorzahnkopf 19 vermieden werden und dadurch auch resultierende Anregungen.

Um Nichtlinearitäten und damit Schwingungsanregungen zu vermeiden, sollte der Statorzahnhals 20, um welchen die Kupferwicklung 21 angeordnet ist, mit einer ausreichenden Breite ZHB ausgelegt werden, so dass der Magnetfluss im Statorzahnhals 20 während des Motorbetriebes nicht den Sättigungsbereich erreicht.

Zwischen dem Rotor 1 und dem Stator 17 ist ein Luftspalt 22 ausgebildet. Dabei ist eine Breite LB des Luftspalts 22 zwischen Rotor 1 und Stator 17 verhältnismäßig groß ausgeführt, so dass ein Verhältnis der Breite LB des Luftspalts 22 zur tangentialen Nutspaltbreite NB zwischen zwei Statorzahnköpfen 19 zwischen 0.25 und 0.5 liegt. Auch durch diese resultierende Reduktion des Luftspaltfeldes können Anregungen des Systems vermieden werden.

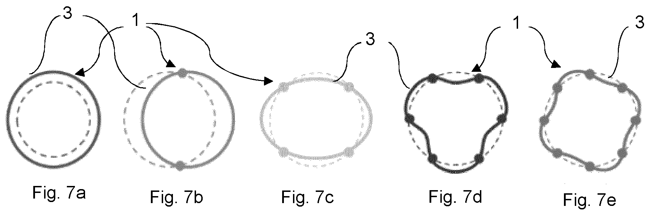

In Fig. 7a-e sind Ansichten in Axialrichtung der Deformation in Radialrichtung einer Mantelfläche 3 eines Rotors 1 des Außenläufermotors 16 gezeigt. Die Mantelfläche 3 wird durch die magnetischen Kräfte, welche zwischen dem Rotor 1 und dem Stator 17 wirken, verformt. Um ein hohes Drehmoment mit dem Motor erzeugen zu können, müssen besonders starke magnetische Kräfte zwischen dem Rotor 1 und dem Stator 17 wirken. Diese Kräfte verformen die Mantelfläche 3 abhängig von der Steifigkeit des Rotors 1, wobei die Rotorglocke 2 und insbesondere der Rotormantel 3 zur Vermeidung von Massenträgheitsmoment eine möglichst geringer Materialstärke aufweisen sollte. Durch die geringe Materialstärke können Schwingungen einfacher entstehen bzw. werden Schwingungen weniger gedämpft.

Abhängig von beispielsweise der Rotorpolzahl, der Anzahl der Statorzähne 18 oder der Bestromung der Statorzähne 18 kann, wie in den Figuren 7 gezeigt, die Mantelfläche 3 zu unterschiedlichen Schwingungen angeregt werden. Figur 7a zeigt eine Mantelfläche 3 welche durch die magnetischen Anziehungskräfte komprimiert wird. In der Figur 7b schwingt die Mantelfläche 3 um zwei Knoten oder Punkte. Insbesondere bei einer Schwingung um zwei Knoten ergibt sich eine 3-dimensionale Schwingungsform, in axialer und radialer Richtung, wie in den Figuren 1b und 2b dargestellt, bei welcher auch die Steifigkeiten der Kugellagerkontakte signifikant mitbeteiligt sind. Figur 7c zeigt eine Schwingung der Mantelfläche 3 um vier Knoten. Abhängig von der Eigenfrequenz des Rotors 1 und der Motordrehzahl, entsteht bei Anregung in der Eigenfrequenz des Rotors 1 eine Resonanz, bei welcher der Motor verstärkt schwingt und damit Geräusche und/oder Vibrationen erzeugt. Bei Schwingungen um zwei Knoten werden überwiegend Vibrationen durch den Motor erzeugt, während bei Schwingungen um vier, sechs oder acht Knoten eher Geräusche durch den Rotor 1 erzeugt werden. Durch die asymmetrische Steifigkeit der Rotorglocke wird die Resonanz gebrochen und in mehrere Resonanzfrequenzen aufgeteilt, welche weniger stark schwingen, wodurch die Motorvibrationen und/oder die Geräusche reduziert werden. Die Figuren 7d und 7e zeigen Schwingungen der Mantelfläche 3 um sechs beziehungsweise acht Punkte.

### Bezugszeichen

- 1: Rotor
- 2: Rotorglocke
- 3: Mantelfläche
- 4: Stirnseite
- 5: Rotorpol
- 6: Aussparung
- 7: Speiche
- 8: Lagerstelle
- 9: radial äußere Seite Rotorpol
- 10: radial innere Seite Rotorpol
- 11: Rotorpolzwischenraum
- 12: Dämpfungselement
- 13: Endabschnitt
- 14: Endabschnitt
- 15: Steg
- 16: Außenläufermotor
- 17: Stator
- 18: Statorzahn
- 19: Statorzahnkopf
- 20: Statorzahnhals
- 21: Kupferwicklung
- 22: Luftspalt
- R: Rotationsachse
- SA: Schwingung in axialer Richtung
- SR: Schwingung in radialer Richtung
- T: tangentialer Abstand Rotorpole
- NB: tangentiale Nutspaltbreite
- ZB: tangentiale Breite Statorzahnkopf
- LB: Luftspaltbreite
- ZHB: Zahnhalsbreite

## Patentansprüche

1. Rotor (1) für einen Außenläufermotor (16) umfassend ein als Rotorglocke (2) ausgebildetes Rotorgehäuse mit darin angeordneten Rotorpolen (5), wobei die Rotorglocke (2) um eine Rotationsachse (R) drehbar in einem Stator (17) des Außenläufermotors (16) lagerbar ist und eine in Bezug auf die Rotationsachse (R) asymmetrische Steifigkeit, insbesondere eine asymmetrische Kippsteifigkeit aufweist, **dadurch gekennzeichnet, dass** der Schwerpunkt der Rotorglocke (2) auf ihrer Rotationsachse (R) liegt.

2. Rotor (1) nach Anspruch 1, **dadurch gekennzeichnet, dass** die Rotorglocke (2) Bereiche unterschiedlicher Geometrie und/oder aus unterschiedlichen Materialen aufweist.

3. Rotor (1) nach mindestens einem der vorhergehenden Ansprüche, **dadurch gekennzeichnet, dass** eine senkrecht zur Rotationsachse (R) ausgebildete Stirnseite (4) der Rotorglocke (2) asymmetrisch ausgebildet ist.

4. Rotor (1) nach Anspruch 3, **dadurch gekennzeichnet, dass** die Stirnseite (4) der Rotorglocke (2) mindestens eine Aussparung (6) und Speichen (7) aufweist, wobei die Speichen (7) aus unterschiedlichen Materialien bestehen und/oder unterschiedliche Dicken bzw. Breiten aufweisen und/oder unterschiedliche Winkel zwischen sich einschließen.

5. Rotor (1) nach Anspruch 4, **dadurch gekennzeichnet, dass** die Speichen (7) derart asymmetrisch um die Rotationsachse (R) verteilt angeordnet sind, dass sie jeweils zwischen zwei Rotorpolen (5) angeordnet sind.

6. Rotor (1) nach Anspruch 4 oder 5 **dadurch gekennzeichnet, dass** die Anzahl der Speichen (7) kleiner als die Anzahl der durch jeweils zwei Rotorpole gebildeten Rotorpolpaare ist und insbesondere die Anzahl der Speichen (7) den beiden nächstkleineren Primzahlen bezogen auf die Anzahl der Rotorpolpaare entspricht.

7. Rotor (1) nach mindestens einem der Ansprüche 4 bis 6 **dadurch gekennzeichnet, dass** die Speichen (7) asymmetrisch in Bezug auf die Rotationsachse (R) verteilt angeordnet sind und jeweils einen möglichst gleichgroßen Winkel einschließen.

8. Rotor (1) nach mindestens einem der vorhergehenden Ansprüche, **dadurch gekennzeichnet, dass** die Rotorpole (5) auf der radial äußeren Seite (9) bogenförmig und auf der radial inneren Seite (10) flach ausgebildet sind.

9. Rotor (1) nach mindestens einem der vorhergehenden Ansprüche, **dadurch gekennzeichnet, dass** ein ringförmiges Dämpfungselement (12) in die Rotorglocke (2) eingesetzt ist.

10. Außenläufermotor (16) mit einer Motorwelle, einem Stator (17) mit einer Mehrzahl von Statorzähnen (18) und einem den Stator (17) umgebenden Rotor (1) gemäß einem der Ansprüche 1 bis 9, **dadurch gekennzeichnet, dass** die Anzahl der Statorzähne (18) kleiner ist als die Anzahl der Rotorpole (5).

11. Außenläufermotor (16) nach Anspruch 10, **dadurch gekennzeichnet, dass** jeder der Statorzähne (18) einen Statorzahnkopf (19) aufweist und ein tangentialer Abstand (T) zwischen den Rotorpolen (5) größer ist als eine tangentiale Nutspaltbreite (NB) zwischen zwei Statorzahnköpfen (19), wobei das Verhältnis der tangentialen Nutspaltbreite (NB) zu tangentialem Abstand (T) der Rotorpole (5) zwischen 0,5 und 0,85 liegt.

12. Außenläufermotor (16) nach Anspruch 10 oder 11, **dadurch gekennzeichnet, dass** jeder der Statorzähne (18) einen Statorzahnkopf (19) aufweist und das Verhältnis von tangentialer Nutspaltbreite (NB) zwischen zwei Statorzahnköpfen (19) zu einer tangentialen Breite (ZB) eines Statorzahnkopfes (19) <= 0,25 ist und bevorzugt in einem Bereich zwischen 0,11 und 0,2 liegt.

13. Außenläufermotor (16) nach einem der Ansprüche 10 bis 12, **dadurch gekennzeichnet, dass** jeder Statorzahn (18) einen Statorzahnhals (20) aufweist, um welchen eine Kupferwicklung (21) angeordnet ist, wobei die Breite (ZHB) des Statorzahnhalses (20) derart ausgelegt ist, dass der Magnetfluss im Statorzahnhals (20) während des Motorbetriebes nicht den Sättigungsbereich erreicht.

14. Außenläufermotor (16) nach einem der Ansprüche 10 bis 13, **dadurch gekennzeichnet, dass** jeder der Statorzähne (18) einen Statorzahnkopf (19) aufweist und zwischen dem Rotor (1) und dem Stator (17) ein Luftspalt (22) ausgebildet ist, wobei das Verhältnis zwischen einer Breite (LB) des Luftspaltes (22) und einer tangentialen Nutspaltbreite (NB) zwischen zwei Statorzahnköpfen (19) in einem Bereich von 0,25 bis 0,5 liegt.

## Claims

1. Rotor (1) for an outrunner motor (16) comprising a rotor housing designed as a rotor bell (2) with rotor poles (5) situated therein, wherein the rotor bell (2) is mountable in a stator (17) of the outrunner motor (16) so as to be rotatable about an axis of rotation (R) and exhibits a rigidity that is asymmetrical in relation to the axis of rotation (R), in particular an asymmetrical tilting rigidity, **characterized in that** the center of gravity of the rotor bell (2) is located on its axis of rotation (R).

2. Rotor (1) according to claim 1, **characterized in that** the rotor bell (2) has areas of different geometry and/or made of different materials.

3. Rotor (1) according to at least one of the preceding claims, **characterized in that** an end face (4) of the rotor bell (2), which is formed perpendicular to the axis of rotation (R), is configured asymmetrically.

4. Rotor (1) according to claim 3, **characterized in that** the end face (4) of the rotor bell (2) comprises at least one cutout (6) and spokes (7), wherein the spokes (7) consist of different materials and/or have different thicknesses or widths and/or include different angles between them.

5. Rotor (1) according to claim 4, **characterized in that** the spokes (7) are arranged asymmetrically around the axis of rotation (R) such that they are each arranged between two rotor poles (5).

6. Rotor (1) according to claim 4 or 5, **characterized in that** the number of spokes (7) is smaller than the number of rotor pole pairs formed by two rotor poles in each case and, in particular, the number of spokes (7) corresponds to the next two smallest prime numbers in relation to the number of rotor pole pairs.

7. Rotor (1) according to at least one of claims 4 to 6, **characterized in that** the spokes (7) are arranged asymmetrically in relation to the axis of rotation (R) and each enclose an angle that is as equal as possible.

8. Rotor (1) according to at least one of the preceding claims, **characterized in that** the rotor poles (5) are arcuate on the radially outer side (9) and flat on the radially inner side (10).

9. Rotor (1) according to at least one of the preceding claims, **characterized in that** a ringshaped damping element (12) is inserted into the rotor bell (2).

10. Outrunner motor (16) with a motor shaft, a stator (17) with a plurality of stator teeth (18) and a rotor (1) surrounding the stator (17) according to one of claims 1 to 9, **characterized in that** the number of stator teeth (18) is smaller than the number of rotor poles (5).

11. Outrunner motor (16) according to claim 10, **characterized in that** each of the stator teeth (18) has a stator tooth head (19) and a tangential distance (T) between the rotor poles (5) is greater than a tangential slot gap width (NB) between two stator tooth heads (19), wherein the ratio of the tangential slot gap width (NB) to the tangential distance (T) between the rotor poles (5) is between 0.5 and 0.85.

12. Outrunner motor (16) according to claim 10 or 11, **characterized in that** each of the stator teeth (18) has a stator tooth head (19) and the ratio of tangential slot gap width (NB) between two stator tooth heads (19) to a tangential width (ZB) of a stator tooth head (19) is <= 0.25 and preferably lies in a range between 0.11 and 0.2.

13. Outrunner motor (16) according to one of claims 10 to 12, **characterized in that** each stator tooth (18) has a stator tooth neck (20) around which a copper winding (21) is arranged, wherein the width (ZHB) of the stator tooth neck (20) is configured such that the magnetic flux in the stator tooth neck (20) does not reach the saturation range during motor operation.

14. Outrunner motor (16) according to one of claims 10 to 13, **characterized in that** each of the stator teeth (18) has a stator tooth head (19) and an air gap (22) is formed between the rotor (1) and the stator (17), wherein the ratio between a width (LB) of the air gap (22) and a tangential slot gap width (NB) between two stator tooth heads (19) lies in a range from 0.25 to 0.5.

## Revendications

1. Rotor (1) pour un moteur à rotor externe (16) comprenant un carter de rotor réalisé sous forme de cloche de rotor (2) avec des pôles de rotor (5) agencés en son sein, dans lequel la cloche de rotor (2) peut être logée dans un stator (17) du moteur à rotor externe (16) de manière à pouvoir tourner autour d'un axe de rotation (R) et présente une rigidité asymétrique par rapport à l'axe de rotation (R), en particulier une rigidité de basculement asymétrique, **caractérisé en ce que** le centre de gravité de la cloche de rotor (2) se trouve sur son axe de rotation (R).

2. Rotor (1) selon la revendication 1, **caractérisé en ce que** la cloche de rotor (2) présente des régions de géométrie et/ou de matériaux différents.

3. Rotor (1) selon au moins l'une quelconque des revendications précédentes, **caractérisé en ce qu'**un côté frontal (4), réalisé perpendiculairement à l'axe de rotation (R), de la cloche de rotor (2) est réalisé de manière asymétrique.

4. Rotor (1) selon la revendication 3, **caractérisé en ce que** le côté frontal (4) de la cloche de rotor (2) présente au moins un évidement (6) et des rayons (7), dans lequel les rayons (7) sont constitués de matériaux différents et/ou présentent des épaisseurs ou des largeurs différentes et/ou forment entre eux des angles différents.

5. Rotor (1) selon la revendication 4, **caractérisé en ce que** les rayons (7) sont répartis asymétriquement autour de l'axe de rotation (R) de manière à être agencés respectivement entre deux pôles de rotor (5).

6. Rotor (1) selon la revendication 4 ou 5, **caractérisé en ce que** le nombre de rayons (7) est inférieur au nombre de paires de pôles de rotor formées par respectivement deux pôles de rotor et **en ce que** le nombre de rayons (7) correspond en particulier aux deux nombres premiers immédiatement les plus petits par rapport au nombre de paires de pôles de rotor.

7. Rotor (1) selon au moins l'une quelconque des revendications 4 à 6, **caractérisé en ce que** les rayons (7) sont répartis asymétriquement par rapport à l'axe de rotation (R) et forment respectivement un angle le plus égal possible.

8. Rotor (1) selon au moins l'une quelconque des revendications précédentes, **caractérisé en ce que** les pôles de rotor (5) sont réalisés en forme d'arc sur le côté radialement extérieur (9) et sont plats sur le côté radialement intérieur (10).

9. Rotor (1) selon au moins l'une quelconque des revendications précédentes, **caractérisé en ce qu'**un élément d'amortissement annulaire (12) est inséré dans la cloche de rotor (2).

10. Moteur à rotor externe (16) avec un arbre de moteur, un stator (17) comprenant une pluralité de dents de stator (18), et un rotor (1) selon l'une quelconque des revendications 1 à 9 entourant le stator (17), **caractérisé en ce que** le nombre de dents de stator (18) est inférieur au nombre de pôles de rotor (5).

11. Moteur à rotor externe (16) selon la revendication 10, **caractérisé en ce que** chacune des dents de stator (18) présente une tête de dent de stator (19) et **en ce qu'**une distance tangentielle (T) entre les pôles de rotor (5) est supérieure à une largeur d'interstice de rainure tangentielle (NB) entre deux têtes de dent de stator (19), dans lequel le rapport de la largeur d'interstice de rainure tangentielle (NB) sur la distance tangentielle (T) des pôles de rotor (5) est compris entre 0,5 et 0,85.

12. Moteur à rotor externe (16) selon la revendication 10 ou 11, **caractérisé en ce que** chacune des dents de stator (18) présente une tête de dent de stator (19) et **en ce que** le rapport de la largeur d'interstice de rainure tangentielle (NB) entre deux têtes de dent de stator (19) sur une largeur tangentielle (ZB) d'une tête de dent de stator (19) est ≤ 0,25 et se situe de manière préférée dans une plage comprise entre 0,11 et 0,2.

13. Moteur à rotor externe (16) selon l'une quelconque des revendications 10 à 12, **caractérisé en ce que** chaque dent de stator (18) présente un col de dent de stator (20) autour duquel est agencé un enroulement en cuivre (21), dans lequel la largeur (ZHB) du col de dent de stator (20) est telle que le flux magnétique dans le col de dent de stator (20) n'atteint pas la région de saturation pendant le fonctionnement du moteur.

14. Moteur à rotor externe (16) selon l'une quelconque des revendications 10 à 13, **caractérisé en ce que** chacune des dents de stator (18) présente une tête de dent de stator (19) et **en ce qu'**un entrefer (22) est formé entre le rotor (1) et le stator (17), dans lequel le rapport entre une largeur (LB) de l'entrefer (22) et une largeur d'interstice de rainure tangentielle (NB) entre deux têtes de dent de stator (19) se situe dans une plage comprise entre 0,25 et 0,5.
